# FASCICULE DE BREVET EUROPEEN

(11) **EP 3 898 306 B1**
(45) Date de publication et mention de la délivrance du brevet: **05.07.2023**
(21) Numéro de dépôt: 19842789.0
(22) Date de dépôt: 04.12.2019
(51) Int. Cl.: B60K 11/08, B60K 11/06

(54) **BOITIER POUR MODULE DE FACE AVANT D'UN VEHICULE AUTOMOBILE**
GEHÄUSE FÜR EIN STIRNSEITENMODUL EINES KRAFTFAHRZEUGS
HOUSING FOR A FRONT FACE MODULE OF A MOTOR VEHICLE

(30) Priorité: 19.12.2018 FR 1873297
(43) Date de publication de la demande: 27.10.2021
(73) Titulaire: Valeo Systemes Thermiques-THS, 78322 Le Mesnil Saint Denis Cedex (FR)
(72) Inventeur: RIPA, Jerome, 78322 LE MESNIL SAINT DENIS CEDEX (FR); ANDRE, Stephan, 78322 LE MESNIL SAINT DENIS CEDEX (FR); HENON, Emmanuel, 78322 LE MESNIL SAINT DENIS CEDEX (FR); LANGLET, Pierre Alexandre, 78322 LE MESNIL SAINT DENIS (FR); DA COSTA PITO, Sergio, 78322 LE MESNIL SAITN DENIS CEDEX (FR)
(74) Mandataire: Valeo Systèmes Thermiques
(86) Numéro de dépôt international: PCT/FR2019/052915
(87) Numéro de publication internationale: WO 2020/128199

(56) Documents cités:
- EP-A2- 1 243 455
- EP-B1- 1 243 455
- CN-U- 207 984 549
- DE-A1-102013 103 551
- FR-A1- 3 016 598

## Description

L'invention concerne un boîtier pour module de face avant d'un véhicule automobile ainsi qu'au procédé de fabrication d'un tel boîtier. L'invention se rapporte également au module de face avant comprenant un tel boîtier ainsi qu'au véhicule automobile comprenant un tel module.

De manière générale, un véhicule automobile comprend une entrée d'air se présentant sous la forme d'une ouverture située sur la face avant dudit véhicule automobile. L'air entrant est utilisé pour permettre un échange de chaleur entre celui-ci et le système de refroidissement du véhicule automobile, ledit système de refroidissement étant situé à proximité de la face avant dudit véhicule. Plus précisément, l'air qui pénètre dans le compartiment moteur du véhicule automobile est guidé vers le système de refroidissement dudit véhicule automobile pour permettre un échange thermique entre l'air entrant et l'échangeur de chaleur du système de refroidissement. Il est important de minimiser les déperditions du flux d'air entre l'entrée d'air et l'échangeur de chaleur. En effet, tout flux d'air pénétrant à l'intérieur du véhicule, et s'échappant vers le compartiment moteur avant d'avoir contribué à l'échange de chaleur à l'intérieur du véhicule automobile, influence de manière négative le coefficient de résistance à l'air dudit véhicule automobile.

De façon connue, le boîtier loge un groupe moto-ventilateur pour faire circuler le flux d'air depuis l'entrée d'air vers la sortie d'air. Le boîtier loge aussi des moyens de traitement thermique pour réchauffer et/ou refroidir le flux d'air préalablement à sa distribution à l'intérieur de l'habitacle. A titre d'exemple, les moyens de traitement thermique, c'est-à-dire les échangeurs de chaleur, peuvent comprendre un évaporateur qui est destiné à refroidir et déshumidifier le flux d'air le traversant, ainsi qu'un condenseur, qui est destiné à réchauffer tout flux d'air qui le traverserait.

De tels boîtier sont habituellement en matière plastique et définissent un volume interne dans lequel sont agencés les échangeurs de chaleur et le groupe moto-ventilateur

Ces boîtiers sont d'épaisseur relativement élevée, pour pouvoir supporter les échangeurs de chaleur, donc relativement coûteux en matière plastique et de poids relativement important.

Il est connu, par exemple du document EP1243455, un conduit de ventilation pour véhicule automobile comprenant un cadre sur lequel est fixée une housse en matériau élastique.

L'objet de l'invention est de proposer un boîtier en matière plastique de haute rigidité relativement aux efforts de torsion et de flexion, tout en étant particulièrement léger.

Pour cela l'invention propose un boîtier pour module de face avant d'un véhicule automobile définissant un conduit pour l'écoulement d'un flux d'air, ledit boîtier comprenant
a. Une structure ajourée comprenant une pluralité d'ouvertures délimitées par des nervures
b. Une peau solidaire de la structure ajourée recouvrant les ouvertures de manière à former une paroi étanche au flux d'air, les ouvertures étant agencées au moins partiellement selon un motif répété.

La structure ajourée présentant une pluralité d'ouvertures, va être plus légère qu'un module de face avant conventionnel tout en minimisant les déperditions du flux d'air et présentant une rigidité satisfaisante grâce à l'agencement de ces ouvertures selon un maillage donné formant ainsi un réseau de nervures reliées les unes aux autres.

La peau, afin d'assurer une étanchéité du boîtier et de garantir l'écoulement du flux d'air à travers les échangeurs de chaleur, est agencée de manière à combler, ou boucher, les ouvertures. La peau étant d'épaisseur moindre que la structure ajourée, il en résulte un gain de poids considérable.

D'autres modes de réalisation selon l'invention proposent que :
a. la structure ajourée comprend au moins 5 ouvertures toutes délimitées par les nervures ;
b. la structure ajourée comprend au moins 10 ouvertures toutes délimitées par les nervures ;
c. la structure ajourée comprend au moins 20 ouvertures toutes délimitées par les nervures ;
d. la structure ajourée comprend au moins 30 ouvertures toutes délimitées par les nervures ;
e. la structure ajourée comprend au moins 40 ouvertures toutes délimitées par les nervures ;
g. les nervures sont agencées au moins partiellement selon un maillage en nid d'abeille;
h. les nervures sont agencées au moins partiellement selon un maillage en triangulation ;
i. l'épaisseur de la structure ajourée est supérieure à celle de la peau ;
j. l'épaisseur de la structure ajourée est comprise entre 1 et 3 mm, plus particulièrement entre 1 et 1,5 mm et l'épaisseur de la peau est comprise entre 0,3 et 1 mm, plus particulièrement entre 0,3 et 0,7 mm ;
k. la structure ajourée est réalisé dans un premier matériau et la peau est réalisée dans un deuxième matériau, le première et deuxième matériaux étant de compositions différentes ;
l. la peau comprend une cavité interne ;
m. les ouvertures sont de formes géométriques différentes ;
n. la surface visible cumulée des nervures est inférieure à la surface visible cumulée des ouvertures, ou autrement dit la surface visible cumulée de la structure ajourée est inférieure à la surface visible cumulée de la peau ;
o. les nervures font saillie de la peau ;
p. les nervures sont noyées au moins partiellement, voire intégralement, dans l'épaisseur de la peau ;
q. la structure ajourée est réalisée en plusieurs parties ne formant pas continuité de matière, chaque partie étant solidaires les unes des autres par l'intermédiaire de la peau,
r. la largeur des nervures est inférieure à la largeur des ouvertures.

L'invention porte également sur un module de face avant comprenant un tel boîtier.

L'invention concerne donc également le procédé de fabrication du boîtier selon l'invention. Ledit procédé comprend les étapes suivantes :
a. Etape de thermoformage, où le second matériau de la peau est chauffé puis mis en forme dans un moule ; et
b. Etape de surmoulage, où le premier matériau de la structure ajourée est injecté sur la peau de manière à former un réseau de nervures avec des ouvertures.

Selon un mode de réalisation additionnel, notamment dans le cas où la peau comprend une cavité interne, l'invention porte également sur le procédé de fabrication d'un boîtier comprenant les étapes suivantes :
a. Etape d'extrusion, où le second matériau de la peau est compressé et chauffé puis mis en forme dans un moule ;
b. Etape de soufflage, où de l'air ou un gaz inerte est soufflé au sein du second matériau issu de la première étape de manière à créer une cavité interne au sein de la peau ; et
c. Etape de surmoulage, où le premier matériau de la structure ajourée est injecté sur la peau issue de la deuxième étape de manière à former un réseau de nervures avec des ouvertures.

Selon un mode de réalisation additionnel, notamment dans le cas où la peau est un matériau d'isolation acoustique, selon l'invention, ledit procédé comporte les étapes suivantes:
a. préchauffage d'au moins une couche de peau d'un deuxième matériau différent du premier matériau, par exemple le deuxième matériau étant un matériau d'isolation acoustique,
b. mise en forme de ladite au moins une couche de peau,
c. positionnement de ladite au moins une couche de peau dans un moule d'injection,
d. surmoulage de la structure au moins autour de ladite au moins une couche de peau par injection du premier matériau dans le moule d'injection, et
e. démoulage.

On entend par matériaux différents, des matériaux de compositions différentes.

Un tel procédé permet d'obtenir par surmoulage une structure du boîtier dans le premier matériau et qui comporte au moins une couche de matériau d'isolation acoustique qui vient combler des ouvertures de la structure

L invention porte également sur un module de face avant comprenant un boîtier tel que décrit ci-dessus. Selon l'invention, le module comprend une entrée d'air et une sortie d'air, au moins un échangeur de chaleur étant agencé au sein du conduit, un groupe moto-ventilateur étant agencé en aval par rapport au flux d'air à l'échangeur de chaleur.

D'autres modes de réalisation du module de face avant pris isolément ou en combinaison proposent que :
a. un volet est agencé au sein du conduit d'écoulement en aval du bloc thermique par rapport à l'écoulement du flux d'air
b. le conduit d'écoulement comprend une entrée et une sortie, la dite sortie étant composée d'au moins deux conduits distincts, le volet étant apte à obturer chacun desdits conduits
c. un ensemble de volets d'obturation aptes à pivoter en rotation de manière à faire varier le débit de flux d'air, est agencé dans le conduit d'écoulement en amont du bloc thermique par rapport à l'écoulement du flux d'air ;
d. le bloc thermique est incliné par rapport à l'ensemble de volets d'obturation ;
e. des aubes sont agencées en amont et/ou en aval du bloc thermique par rapport à l'écoulement du flux d'air ;
f. la section de passage du conduit d'écoulement s'agrandit depuis l'entrée jusqu'au bloc thermique et rétrécit depuis le bloc thermique jusqu'à la sortie.

L'invention concerne également un véhicule comprenant un tel module de face avant.

D'autres modes de réalisation du véhicule pris isolément ou en combinaison proposent que :
a. le véhicule comprend une entrée d'air, éventuellement dotée d'une calandre, la sortie du conduit d'écoulement du module de face avant comprend un conduit de débourrage agencé pour mener le flux d'air vers l'extérieur du véhicule et un conduit de refroidissement agencé pour mener le flux d'air vers le compartiment moteur du véhicule ;
b. le véhicule comprend en outre une entrée d'air additionnelle et un conduit additionnel reliant ladite entrée additionnelle au conduit de débourrage.

D'autres caractéristiques et avantages de l'invention ressortiront à la lecture de la description qui suit, en référence aux figures annexées, qui illustrent :
a. La figure 1 correspond à une représentation schématique d'un module de face avant selon une vue de profil ;
b. La figure 2 illustre une vue en perspective d'une partie de la structure ajourée du boîtier selon l'invention ;
c. La figure 3 illustre une vue en perspective d'une partie du boîtier selon l'invention ;
d. La figure 4 illustre une vue schématique en coupe d'une partie du boîtier selon l'invention selon un mode de réalisation ;
e. La figure 5 illustre une vue en perspective d'une partie du boîtier selon l'invention ;
f. La figure 6 illustre une vue schématique en coupe d'une partie du boîtier selon l'invention selon un autre mode de réalisation ;
g. La figure 7 illustre de manière schématique un véhicule automobile comprenant un module de face avant selon une vue de profil ;
h. la figure 8 est un organigramme de différentes étapes d'un procédé de fabrication du boîtier de l'installation.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

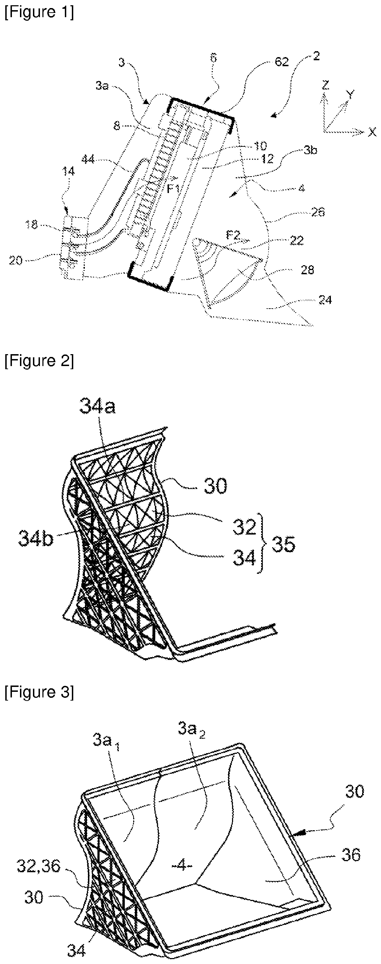

La figure 1 illustre un module 2 de face avant pour une entrée d'air d'un véhicule 1 automobile selon l'invention. Le module 2 de face avant s'étend selon une direction longitudinale (X), transversale (Y) et verticale (Z), par exemple par rapport aux axes du véhicule 1, lorsque le module de face avant est installé dans le véhicule 1 automobile.

Le module 2 de face avant selon l'invention comprend un boîtier 3, qui sera décrit plus en détail ultérieurement, correspondant à une enveloppe, ou encore une gaine, définissant ainsi, de par ses parois, un conduit d'écoulement 4, autrement dit un canal d'écoulement, avec une entrée d'air 20 et une sortie 22 dans lequel s'écoule un flux d'air.

Le module 2 de face avant d'un flux d'air selon l'invention comprend en outre un bloc thermique 6. Le bloc thermique 6 comprend au moins un échangeur de chaleur destiné à permettre un échange thermique entre le flux d'air et le fluide circulant au sein de l'échangeur de chaleur. Tel qu'illustré en figure 1, le bloc thermique 6 comprend ici un premier et un second échangeur de chaleur 8, 10. Le premier échangeur de chaleur 8 correspond par exemple à un condenseur tandis que le second échangeur de chaleur 10 correspond par exemple à un radiateur. Le bloc thermique 6 comprend en outre un groupe moto-ventilateur 12 correspondant à un ventilateur avec des pâles et un moteur associé de manière à pouvoir aspirer et relâcher un flux d'air à travers le module 2 de face avant, et ce même lorsque le véhicule 1 est à l'arrêt. Le bloc thermique 6 comprend également un cadre porteur 62, correspondant à une structure rigide, plus précisément un cadre rigide en plastique avec quatre montants délimitant une surface dans laquelle sont agencés les échangeurs de chaleur 8,10 et ledit groupe moto-ventilateur 12. Afin de garantir la continuité du conduit d'écoulement 4, le boîtier 3 est fixé de manière étanche au cadre porteur 62. Autrement dit le cadre porteur 62 assure la continuité du conduit d'écoulement 4, ou en d'autres termes, le cadre porteur correspond à une partie du conduit d'écoulement 4.

Le module 2 de face avant selon l'invention peut comprendre en outre un dispositif d'obturation 14 comprenant un ensemble de volets d'obturation 18 aptes à pivoter en rotation de manière à faire varier le débit du flux d'air, ledit dispositif d'obturation 14 est agencé dans le conduit d'écoulement 4 en amont du bloc thermique 6 par rapport à l'écoulement du flux d'air. Le dispositif d'obturation 14 comprend en outre un cadre support 16 présentant des paliers de manière à porter les volets d'obturation 18.

Chaque volet d'obturation 18 comprend un axe de rotation se matérialisant par un tourillon qui est inséré dans les paliers du cadre support 16. Les axes de rotation permettent aux volets d'obturation 18 de passer d'une configuration d'ouverture à une configuration de fermeture. La configuration d'ouverture, ou autrement dit ouvrir un volet d'obturation 18, revient à placer (par rotation) les volets d'obturation 18 de manière à ce qu'ils s'opposent le moins possible au passage du flux d'air tout en l'orientant de manière appropriée. Comme illustré sur la figure 1, dans la configuration d'ouverture, les volets d'obturation 18 sont agencés dans une position horizontale, en d'autres termes ils s'étendent selon une direction longitudinale (X) et transversale (Y), et assurent ainsi que le débit pour le flux d'air soit maximal, l'entrée d'air 20 d'air étant dégagée. La configuration de fermeture, ou autrement dit fermer un volet d'obturation 18, revient à placer les volets d'obturation 18 de manière à ce qu'ils s'opposent par leur surface frontale au maximum à l'écoulement du flux d'air F, en coopération avec les autres volets d'obturation 18. Dans cette configuration, les volets d'obturation 18 sont agencés dans une position verticale, autrement dit ils s'étendent selon une direction transversale (Y) et verticale (Z), et assurent ainsi que le débit du flux d'air soit minimal voire nul, l'entrée d'air 20 d'air étant obturée. Bien évidemment, les volets d'obturation 18 sont aptes à adopter toute position intermédiaire entre ces deux configurations.

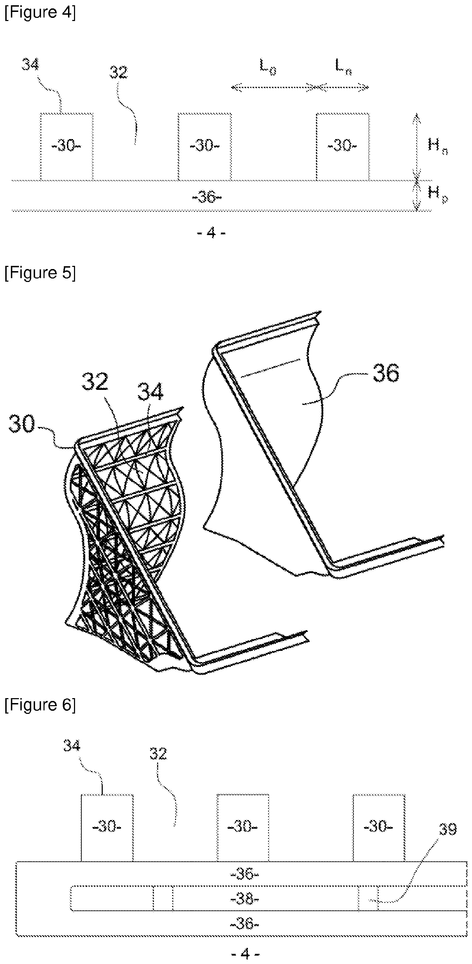

Selon l'invention, le boîtier 3 du module 2 de face avant comprend une structure ajourée 30 (illustrée en figure 2) présentant au moins partiellement une pluralité d'ouvertures 32 et une peau 36 (illustrée en figure 3 et 5) agencée de manière à combler, ou obturer, intégralement les ouvertures 32 de la structure ajourée 30.

La structure ajourée 30 est partiellement illustrée en figure 2. La structure ajourée 30 correspond à une armature faite dans un premier matériau principalement un thermoplastique. Le thermoplastique le plus couramment utilisé correspond à du polypropylène chargé à 20 % en Talc (PP TD 20) bien que d'autres polymères tel qu'un polypropylène chargé à 40 % en craie (PP KD 40) pourrait correspondre pour un tel usage. La structure ajourée 30 correspond à une armature et est réalisé dans un matériau rigide afin de pouvoir résister aux efforts de torsion et de flexion.

Comme illustré sur la figure 2, la structure ajourée 30 présente au moins partiellement une pluralité d'ouvertures 32, autrement dit, la structure ajourée 30 présente des trous ou des évidements au sein de sa structure. Les ouvertures 32 sont agencées au moins partiellement selon un motif répété. Autrement dit, la structure de la structure ajourée 30 définit un maillage par les nervures 34 et les ouvertures 32 de façon à définir un ensemble de cellules 35 pouvant être de même forme géométrique ou de forme géométrique différente. Une cellule 35 correspond à un ensemble d'une ouverture 32 et d'une pluralité de nervures 34, deux cellules 35 juxtaposées pouvant avoir une ou plusieurs nervures 34 en commun. Les nervures 34 sont aussi reliées les unes aux autres et forment des noeuds ou des jonctions.

Pour résumer, selon l'invention il est compris que les nervures 34 définissent une ouverture 32, autrement dit un espace vide, si bien que lorsqu'il est indiqué que l'ouverture ou la cellule a une certaine forme, par exemple triangulaire, cela implique que trois nervures 34 définissent entre elles une ouverture 32 qui est en forme de triangle. De la même manière, quatre nervures 34 vont définir entre elles une ouverture 32 de forme rectangulaire, et ainsi de suite. En résumé, une pluralité de nervures 34 vont définir entre elles une ouverture 32 de forme polygonale. Pour simplifier, il sera dit par la suite qu'une cellule 35, étant constituée d'une ouverture 32 et d'une pluralité de nervures 34, est d'une forme géométrique (polygonale, circulaire...), la forme étant un ensemble de contours ou un ensemble de points définis par les nervures 34.

En d'autres termes, la structure ajourée 30 définit un réseau de nervures 34 séparées par des ouvertures 32 de manière à définir une armature, ou un squelette, robuste et plus légère. Le réseau de nervures 34 définit ainsi un maillage qui peut être homogène (comme illustré en figure 2) ou hétérogène.

Comme illustré en figure 2, le maillage, et donc les cellules 35, peuvent être de forme triangulaire ou rectangulaire ou toute autre forme polygonale. Le maillage et donc les cellules 35 peuvent aussi avoir d'autres formes géométriques telles que des cercles ou encore des ellipses. Les ouvertures 32, et donc les cellules 35, sont agencées au moins partiellement selon un motif répété par exemple selon un ensemble de triangles. Les cellules 35, et donc les ouvertures 32, peuvent être de forme géométrique et de dimensions identiques ou différentes.

Autrement dit, le maillage peut comprendre différents motifs, les ouvertures 32, et donc les cellules 35, peuvent être agencées selon un motif en nid d'abeilles, c'est-à-dire les ouvertures 32, et donc les cellules 35, correspondent à des alvéoles. Le maillage peut aussi être selon un motif en triangle, on parle de triangulation où les nervures dessinent des triangles, on peut aussi de parler d'un maillage de type tour Eiffel.

La figure 3 illustre le boîtier 3 selon l'invention formant une partie du conduit d'écoulement 4. Le boîtier 3 comprend une structure ajourée 30 telle que définie ci-dessus et une peau 36. La peau 36 est agencée de manière à combler, ou obture, les ouvertures 32 de manière à garantir une étanchéité au sein du conduit d'écoulement 4 et de faire en sorte que l'intégralité du flux d'air soit acheminée vers les échangeurs de chaleur 8, 10. On peut voir que la peau 36 correspond à une couche uniforme agencée tout du long de la structure ajourée 30.

La figure 4 illustre de manière schématique un tel agencement selon une vue en section. La peau 36 correspond à une couche uniforme d'un matériau, qui est assujettie, ou accolée, à la structure ajourée 30 de manière à boucher les trous formés par le réseau de nervures 34 et faire en sorte que le flux d'air reste cantonné au sein du conduit d'écoulement 4.

La peau 36 est réalisée dans un second matériau qui peut être identique au matériau de la structure ajourée 30. Toutefois, de manière préférentielle, la peau est réalisée dans un matériau plus léger. A titre d'exemples nous pouvons citer divers polymères tels que le PolyTéréphtalate d'Ethylène (PET), le PolyPropylène non chargé (PP), l'Acrylonitrile Butadiène Styrène (ABS) ou encore le polystyrène (PS) ou encore un matériau poreux, ledit matériau ayant ou non des propriétés d'isolant phonique.

Selon un autre aspect de l'invention, la peau 36 est réalisée dans un deuxième matériau d'isolation acoustique différent du premier matériau. La densité du deuxième matériau est inférieure à celle du premier matériau. La densité du deuxième matériau est par exemple inférieure à 1. Le deuxième matériau d'isolation acoustique peut être un matériau poreux.

En résumé, le boîtier 3 selon l'invention comprend donc deux couches, une première couche matérialisée par la structure ajourée 30 réalisée dans un matériau plus rigide et de densité plus élevée que celui de la peau 36. Cette première couche présente au moins partiellement des ouvertures 32. Le boîtier 3 comprend en outre une seconde couche matérialisée par la peau 36 réalisée dans un matériau moins rigide et de densité plus basse que celui de la structure ajourée 30.

Le boîtier 3 selon l'invention est tel que l'épaisseur Hₙ (ou la hauteur) de la structure ajourée 30, et plus particulièrement l'épaisseur des nervures 34, est supérieure à celle de la peau Hₚ, comme illustré sur la figure 4. En effet, l'épaisseur Hₙ de la structure ajourée 30, et plus particulièrement l'épaisseur des nervures 34, est comprise entre 1 et 1,5 mm, de préférence 1,2 mm, tandis que l'épaisseur Hₚ de la peau 36 est comprise entre 0,3 et 0,7 mm, de préférence 0,5 mm. L'épaisseur Hₙ de la nervure 34 correspond à l'écart mesuré entre deux faces parallèles, à savoir celle qui est en intégralement en contact avec la peau 36 et celle opposée ou parallèle comme illustré sur la figure 4. De manière analogue, l'épaisseur Hₚ de la peau 36 correspond à l'écart mesuré en la face en contact avec les nervures 34 et celle opposée, ou parallèle, à cette dernière. Dans le cas où la nervure 34 est noyée dans la peau 36, on peut parler d'une épaisseur Hₙ à nue.

Le boîtier 3 selon l'invention est tel que la largeur Lₙ des nervures 34 est inférieure à la largeur Lₒ des ouvertures 32 comme illustré en figure 4. La largeur Lₙ des nervures 34 correspond à l'écart mesuré entre les deux faces parallèles qui ne sont pas intégralement en contact avec la peau 36. La largeur Lₒ des ouvertures 32 correspond à l'écart mesuré entre deux nervures 34 parallèles, ou dans le cas d'une ouverture en forme de triangle, la largeur Lₒ correspond à la hauteur du triangle.

Bien évidemment, et tel qu'illustré sur les figures 2, 3 et 5, les nervures 34 peuvent présenter des largueurs et épaisseurs différentes les unes des autres. Comme illustré en figure 2, les nervures à l'horizontale 34a peuvent être plus épaisses et/ou larges que les nervures en diagonale 34b et inversement.

Le boîtier 3 peut comprendre en outre d'autres ouvertures qui ne sont pas recouverte d'une structure ajourée ni d'une peau pour pouvoir permettre l'introduction de divers éléments, par exemple d'un filtre à air, une grille de protection des échangeurs de chaleur, *etc.*

Il existe plusieurs moyens pour former la peau 36. La peau 36 peut être formée par thermoformage. Autrement dit, le second matériau thermoplastique généralement sous la forme de plaque est chauffé de manière à être ramolli puis, profitant de la ductilité du matériau dans cet état ramolli, la peau 36 est mise en forme dans un moule. La structure ajourée 30 est ensuite surmoulé sur la peau 36. La figure 4 illustre un boîtier issu d'un tel procédé.

L'invention concerne donc également le procédé de fabrication du boîtier selon l'invention. Ledit procédé comprend les étapes suivantes :
a. Etape de thermoformage, où le second matériau de la peau 36 est chauffé puis mis en forme dans un moule ;
b. Etape de surmoulage, où le premier matériau de la structure ajourée 30 est injecté sur la peau 36 de manière à former un réseau de nervures avec des ouvertures 32.

La peau 36 peut également être formée par extrusion. Pour cela, le second matériau thermoplastique passe à travers une extrudeuse, à savoir qu'il est compressé et chauffé puis contraint de traverser une filière ayant la section de la pièce à obtenir, c'est-à-dire la peau 36, afin de réaliser un étirage. La structure ajourée 30 est ensuite surmoulé sur la peau 36.

Selon une variante, la peau peut être aussi formée par un procédé d'extrusion-soufflage, à savoir qu'à la suite de l'extrusion, de l'air ou un gaz inerte est insufflé de manière à ce que la matière ductile soit plaquée contre les parois du moule de soufflage permettant ainsi de former une peau 36 creuse. Autrement dit, la peau 36 présente une cavité interne 38. La structure ajourée 30 est ensuite surmoulé sur la peau 36 creuse. La figure 6 illustre un boîtier issu d'un tel procédé. Un tel boîtier 3 peut être particulièrement avantageux car, de par la cavité interne 38 formée, l'étanchéité est toujours garantie et le flux d'air s'écoulera uniquement au sein du conduit d'écoulement 4. Il n'est donc pas nécessaire dans ce mode de réalisation d'ajouter un cordon d'étanchéité entre les deux demi-boîtiers. Il est également possible d'agencer des entretoises 39 au sein de la cavité interne 38 afin de renforcer la structure de la peau 36.

Le boîtier 3 selon l'invention, et tel qu'illustré en figure 1, est réalisé en deux parties, une première partie 3a reliant l'entrée du boîtier 3, et donc l'entrée d'air 20 du conduit découlement 4, où est agencée le dispositif d'obturation 14, au bloc thermique 6, notamment au cadre porteur 62, et une deuxième partie 3b reliant le bloc thermique 6, et plus précisément le cadre porteur 62, à la sortie du boîtier 3 et donc à la sortie d'air 22 du conduit d'écoulement 4. Les parties 3a, 3b du boîtier comprennent des moyens de fixation tels que des clips, crochets, vis avec tige filetée/écrous avec taraudage, boulons, *etc.* de formes complémentaires aux moyens de fixation agencés sur le cadre porteur 62. On comprend donc que le cadre porteur 62 assure la continuité du conduit d'écoulement 4 entre les deux parties 3a,3b du boîtier 3.

Selon d'autres modes de réalisation, les parties 3a,3b peuvent aussi comprendre des moyens de fixation de formes complémentaires de manière à ce que chaque partie 3a,3b puisse se fixer l'une à l'autre. Il est également envisageable d'avoir un boîtier 3 en une seule pièce monobloc formant continuité de matière entre l'entrée d'air 20 et la sortie d'air 22 du conduit d'écoulement 4.

Le boîtier 3, et plus précisément chaque partie 3a,3b, selon l'invention et tel qu'illustré en figure 3, peut comprendre deux demi-boîtiers 3a₁,3a₂. Chaque paire de demi-boîtier 3a₁,3a₂ ou 3b₁,3b₂ forment ensemble une partie du conduit d'écoulement 4. Autrement dit, la première paire de demi-boîtier 3a₁,3a₂, constitue, la partie 3a du boîtier 3 à savoir la partie du conduit d'écoulement 4 reliant l'entrée du boîtier 3, notamment l'entrée d'air 20 du conduit d'écoulement 4, où est agencé le dispositif d'obturation 14, au bloc thermique 6, notamment au cadre porteur 62. La deuxième paire de demi boîtier 3b₁,3b₂ (non illustrée), constitue la deuxième partie 3b à savoir la partie du conduit d'écoulement 4 reliant le bloc thermique 6, et plus précisément le cadre porteur 62, à la sortie du boîtier 3 et donc à la sortie d'air 22 du conduit d'écoulement 4. Chaque paire de demi-boîtier 3a₁,3a₂, ou 3b₁,3b₂ comprend des moyens de fixation de forme complémentaire tel que des clips où la partie femelle est agencé sur un demi-boîtier 3a₁ et la partie mâle est agencé sur l'autre demi-boîtier 3a₂ correspondant ou inversement. Ces moyens de fixation peuvent être réversibles de sorte que lesdits demi-boîtiers soient fixés l'un à l'autre de manière amovible, autrement dit que lesdits demi-boîtiers soient dissociables par une liaison réversible

L'invention concerne donc également le procédé de fabrication du boîtier selon l'invention. Ledit procédé comprend les étapes suivantes :
a. Etape d'extrusion, où le second matériau de la peau 36 est compressé et chauffé puis mis en forme dans un moule ;
b. Etape de soufflage, où de l'air ou un gaz inerte est soufflé au sein du second matériau issu de la première étape afin de créer une cavité interne au sein de la peau 36;
c. Etape de surmoulage, où le premier matériau de la structure ajourée 30 est injecté sur la peau 36 issue de la deuxième étape de manière à former un réseau de nervures avec des ouvertures 32.

L'invention concerne donc également le procédé de fabrication du module 2 de face avant pour véhicule 1 automobile comprenant un boîtier 3 tel que décrit précédemment. Ledit procédé comprend les étapes suivantes :
a. Etape d'insertion du bloc thermique où les échangeurs de chaleurs et le groupe moto-ventilateur sont agencés au sein du conduit d'écoulement définit par le boîtier issu de l'étape de surmoulage tel que décrite ci-dessus
b. Etape d'assemblage mécanique où les deux boîtiers sont asujettis, les boîtiers peuvent être sertis, boutrollés, vissés ou encore clipés ensembles afin de former le conduit d'écoulement 4.

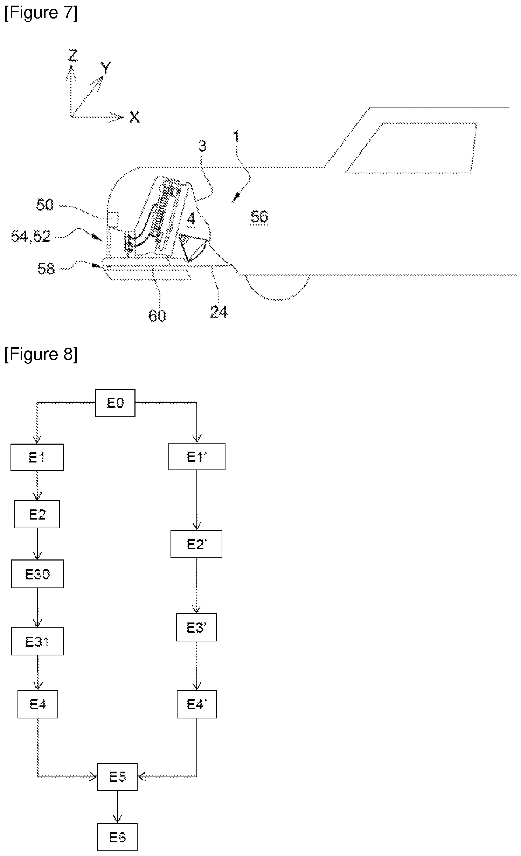

En référence à la figure 8, selon un autre mode de réalisation, l'étape de préchauffage de la couche de peau 36, est suivie de l'étape de mise en forme qui se décompose en une sous-étape E2 dans laquelle la couche de peau 36 préchauffée est placée dans un moule de thermoformage (non représenté), puis après avoir laissé refroidir la couche de peau 36 (sous-étape E30), la couche de peau 36 refroidie peut être démoulée (sous-étape E31).

Selon l'exemple particulier avec une température de préchauffage autour de 180°C, la couche de peau 36 peut refroidir jusqu'à atteindre une température autour de 70°C.

La couche de peau 36 thermoformée peut alors être positionnée dans un moule d'injection à l'étape E4.

Selon ce premier mode de réalisation, la mise en forme de la couche de peau 36 est réalisée pendant le refroidissement de la couche de peau 36 dans le moule de thermoformage (non représenté).

Selon un deuxième mode de réalisation, la couche de peau 36 est préchauffée mais n'est plus thermoformée. De façon générale, la couche de peau 36 est préchauffée de manière à être ramolli puis, profitant de la ductilité du deuxième matériau dans cet état ramolli, la couche de peau 36 est mise en forme dans le moule d'injection pour le surmoulage de la structure ajourée 30 sur la couche de peau 36, et non plus dans un moule de thermoformage.

Selon un procédé alternatif, lors de l'étape préliminaire E0, le deuxième matériau peut être coupé et amené pour être placé dans un support tel qu'un cadre à l'étape E1'. Le cadre maintient en position le deuxième matériau. Il peut comporter à cet effet des organes de maintien, tels que des pinces, qui maintiennent la couche de deuxième matériau, autrement dit la couche de peau 36 ou plus simplement la peau 36.

Le cadre est par exemple agencé devant l'outil d'injection. Le cadre est agencé devant un demi-moule formant avec un autre demi-moule complémentaire le moule d'injection permettant le surmoulage de la structure ajourée 30 sur la couche réalisée dans un deuxième matériau. Plus précisément, le cadre peut être placé entre les deux demi-moules.

Par ailleurs, le cadre peut comporter différents emplacements pour maintenir plusieurs couches de deuxième matériau.

Le procédé comporte ensuite selon ce deuxième mode de réalisation, une étape E2' pour préchauffer le cadre maintenant la couche de deuxième matériau. Ladite couche peut être maintenue dans sa forme initiale par le cadre lors de l'étape E2' de préchauffage. L'étape E2' de préchauffage est donc mise en oeuvre à l'aide du cadre.

Un tiroir chauffant vient par exemple entourer le cadre maintenant le(s) couche(s). Le tiroir chauffant comporte par exemple deux résistances venant chauffer de chaque côté de chaque couche. Le cadre est donc inséré dans le tiroir chauffant pendant l'étape de préchauffage E2'.

Avec un tel tiroir chauffant, la température de préchauffage est contrôlable, par exemple autour de 180°C.

Si la couche de deuxième matériau présente deux faces opposées différentes, par exemple si la couche comporte sur l'une de ses faces une peau telle qu'une peau d'étanchéité à l'air, la température de préchauffage peut être différente pour chaque face de la couche de peau 36.

À l'issue de l'étape de préchauffage E2', le tiroir chauffant s'enlève du cadre et revient à sa position initiale à l'étape E3'.

Le cadre libère ensuite la couche de deuxième matériau préchauffée qui est agencée dans le moule d'injection, plus précisément pris en sandwich entre les deux demi-moules à l'étape E4'.

En particulier, les deux demi-moules se rapprochent l'un de l'autre jusqu'à ce que le cadre maintenant la peau 36 soit prise en sandwich entre les deux. Le cadre peut par exemple se déplacer en même temps que l'un des demi-moules. Lorsque le moule d'injection se ferme, les pinces s'ouvrent de façon à libérer la couche de deuxième matériau et s'effacent, pour que la couche de deuxième matériau soit complètement prise et maintenue dans le moule d'injection.

La mise en forme de la couche de deuxième matériau se fait selon ce deuxième mode de réalisation dans le moule d'injection, par l'empreinte du moule d'injection.

Les deux étapes E5 et E6 se déroulent ensuite comme décrit ci-dessous.

La structure ajourée est ensuite surmoulée sur la couche thermoformée ou préchauffée selon le premier ou deuxième mode de réalisation à l'étape de surmoulage E5.

Lors de l'étape de surmoulage E5, le premier matériau est injecté dans le moule d'injection au moins en partie autour de la couche de deuxième matériau, autrement dit la peau 36, pour réaliser la structure ajourée 30 du boîtier 3.

Plus précisément, le premier matériau est injecté pour former les parois du boîtier 3 et est également sur les bordures de la couche de matériau d'isolation acoustique destinée à combler les ouvertures 32, de sorte qu'elle soit liée aux parois du boîtier 3.

La température de préchauffage est inférieure à la température d'injection.

Enfin, à l'étape E6, la structure ajourée 30 est démoulée. La structure ajourée 30 obtenue présente une armature dans le premier matériau et comporte au moins une couche du deuxième matériau, par exemple un matériau d'isolation acoustique ou phonique, qui comble au moins une ouverture 32 de la structure ajourée 30.

Selon un mode de réalisation non illustré, le boîtier 3 est réalisé de manière à ce que la structure ajourée 30 est réalisée en plusieurs parties ne formant pas continuité de matière, et notamment en plusieurs flancs ou montants, avec chaque partie étant solidaires les unes des autres par l'intermédiaire de la peau 36. Par exemple, le flanc latéral de la structure ajourée est dissociée du flanc arrière de la structure ajourée, et la peau formant une continuité de matière relie ces flancs l'un à l'autre, si bien qu'il est possible de replier les parties du boîtier les uns sur les autres afin de pouvoir les transporter plus facilement, la peau 36 étant réalisé dans un matériau flexible.

Bien évidemment, la structure ajourée peut être réalisée en une seule pièce formant continuité de matière, autrement dit il n'est pas possible de dissocier une partie de l'autre sans causer des dommages irréversibles.

Le module 2 de face avant selon l'invention comprend en outre comprend un volet 28 agencé au sein du conduit d'écoulement 4 en aval du bloc thermique 6 par rapport à l'écoulement du flux d'air. Le volet 28 est de type tambour comme illustré sur la figure 1 car, étant donné qu'un tel dispositif de régulation s'étend sur une grande partie de la largeur du véhicule (Axe Y) pendant ainsi atteindre plus d'un mètre, le volet tambour, de par sa structure qui présente une meilleure résistance mécanique, est mieux adapté pour un tel usage. D'autres volets peuvent être envisageables tels qu'un volet coulissant (également connu sous l'appellation anglaise sliding door) comprenant une porte coulissante sur laquelle est agencée au moins une crémaillère et un engrenage complémentaire à la crémaillère mis en rotation autour d'un axe par un actionneur afin de mettre ce volet en mouvement, notamment selon un mouvement de translation, selon un mode de réalisation non illustré

Toujours selon l'invention, le bloc thermique 6 est inclinée par rapport au dispositif d'obturation 14. En d'autres termes, les plans médians du bloc thermique 6 et du dispositif d'obturation 14 forment un angle différent de 0° (non nul), en particulier un angle compris dans un écart entre 10 et 80°, plus précisément dans un écart entre 30° et 60°. Un tel agencement permet de diminuer l'encombrement stérique du module 2 de face avant.

Toujours selon l'invention, il peut s'avérer avantageux que des aubes 44 soient agencées en amont et/ou en aval du bloc thermique 6 par rapport à l'écoulement du flux d'air. Les aubes 44 correspondent à des guides d'air sous forme de parois aux formes arrondies définissant des couloirs pour le flux d'air afin de répartir le flux d'air F1 (figure 1) sur l'intégralité de la surface des échangeurs de chaleur 8, 10 du bloc thermique 6, il en résulte un meilleur rendement thermique.

Toujours selon l'invention, la section de passage du conduit d'écoulement 4 s'agrandit depuis l'entrée d'air 20 du conduit d'écoulement 4 jusqu'au bloc thermique 6 et rétrécit depuis le bloc thermique 6 jusqu'à la sortie d'air 22 du conduit d'écoulement 4 selon le sens d'écoulement du flux d'air. Autrement dit, la section de passage du conduit d'écoulement 4 a au moins une dimension (largeur et/ou hauteur) qui augmente au fur et à mesure de la longueur, ou au fur et à mesure que l'on se rapproche du bloc thermique 6 en partant de l'entrée d'air 20, selon le sens d'écoulement du flux d'air. De manière analogue, la section de passage du conduit d'écoulement 4 a au moins une dimension (largeur et/ou hauteur) qui diminue au fur et à mesure de la longueur, ou au fur et à mesure que l'on s'éloigne du bloc thermique 6 en se rapprochant de la sortie d'air 22, selon le sens d'écoulement du flux d'air

Le boîtier 3 du module 2 de face avant selon l'invention comprend au moins un moyen d'étanchéité pour éviter toute fuite d'air en dehors du conduit d'écoulement 4. Autrement dit, le ou les moyens d'étanchéité assurent que l'intégralité du flux d'air passant par l'entrée d'air 20 du conduit d'écoulement 4 ressorte par la sortie d'air 22 du conduit d'écoulement 4. Le ou les moyens d'étanchéité peuvent être agencés à différents endroits du module 2 de face avant. En effet, chaque moyen d'étanchéité est agencé à l'interface de, c'est-à-dire entre, deux éléments du module 2 de face avant disjoints, autrement dit, dissociables ou encore ne formant pas continuité de matière. Plus précisément, afin de réaliser une étanchéité optimale, le moyen d'étanchéité est agencé sur le pourtour périphérique de chaque élément formant une partie du conduit d'écoulement 4 dissociés. Autrement dit, entre deux éléments formant une partie du conduit d'écoulement 4, un moyen d'étanchéité est agencé sur la surface de liaison périphérique au niveau des bords périphériques de chacun de ces éléments.

Le moyen d'étanchéité peut donc être agencé entre chaque demi-boîtier 3a₁,3a₂ et 3b₁,3b₂ et/ou entre une partie 3a ou 3b du boîtier 3 et le cadre porteur 62 et/ou entre chaque demi-boîtier 3a₁,3a₂ et 3b₁,3b₂ et le cadre porteur 62. Il est aussi possible d'envisager de positionner un moyen d'étanchéité entre le boîtier 3 et le cadre support 16 du dispositif d'obturation 14 au niveau de l'entrée d'air 20.

La figure 7 illustre une coupe verticale d'un véhicule 1 automobile selon une direction longitudinale du véhicule. Le véhicule 1 comprend une poutre de parechocs 50 en dessous de laquelle est placée une calandre 52 ou grille. Cette calandre 52 est fixe et reste en position ouverte pour laisser passer un flux d'air entrant. Le véhicule 1 selon l'invention comprend un module 2 de face avant tel que décrit ci-dessus.

Le véhicule 1 automobile selon l'invention comprend donc une entrée d'air 54 dotée d'une calandre 52 et un module 2 de face avant, agencé en aval par rapport à un flux d'air, cette entrée d'air. La sortie 22 du conduit d'écoulement 4 comprend un conduit de débourrage 24 agencé pour mener le flux d'air vers l'extérieur du véhicule 1 automobile et un conduit de refroidissement 26 agencé pour mener le flux d'air vers le compartiment moteur 56 du véhicule.

Le véhicule 1 selon l'invention comprend en outre une entrée additionnelle 58 ainsi qu'un conduit additionnel 60 reliant ladite entrée additionnelle 58 avec le conduit de débourrage 24 menant le flux d'air vers l'extérieur du véhicule. Ceci permet d'accentuer l'effet venturi du conduit de débourrage 24 augmentant ainsi le débit d'air circulant améliorant ainsi le rendement thermique. L'entrée additionnelle 58 peut également être dotée d'une grille afin d'éviter tout corps étranger (branches, feuilles, *etc.*) de pénétrer au sein du conduit additionnel 60.

L'invention telle qu'elle vient d'être décrite ne saurait se limiter aux moyens et configurations exclusivement décrits pour un exemple de réalisation particulier, et s'applique également à toutes combinaisons de ces moyens ou configurations, ainsi qu'aux équivalents et à toute combinaison de tels moyens ou configurations avec les équivalents, dans le cadre défini par les revendications.

## Revendications

1. Boîtier (3) pour module (2) de face avant d'un véhicule (1) automobile définissant un conduit d'écoulement (4) pour l'écoulement d'un flux d'air, ledit boîtier comprenant
a. Une structure ajourée (30) comprenant une pluralité d'ouvertures (32) délimitées par des nervures (34)
b. Une peau (36) solidaire de la structure ajourée (30) recouvrant les ouvertures (32) de manière à former une paroi étanche au flux d'air, **caractérisé en ce que** les ouvertures (32) sont agencés au moins partiellement selon un motif répété.

2. Boîtier (3) selon la revendication 1, dans lequel la structure ajourée (30) comprend au moins 5 ouvertures (32) toutes délimitées par les nervures (34).

3. Boîtier (3) selon l'une des revendications précédentes, dans lequel les nervures (34) sont agencées au moins partiellement selon un maillage en triangulation.

4. Boîtier (3) selon l'une des revendications précédentes, dans lequel l'épaisseur de la structure ajourée (30) est comprise entre 1 et 3 mm et l'épaisseur de la peau (36) est comprise entre 0,3 et 1 mm.

5. Boîtier (3) selon l'une des revendications précédentes, dans lequel la structure ajourée (30) est réalisée dans un premier matériau et la peau (36) est réalisée dans un deuxième matériau, le premier et deuxième matériaux étant de compositions différentes.

6. Boîtier (3) selon l'une des revendications précédentes, dans lequel la peau (36) comprend une cavité interne (38).

7. Boîtier (3) selon l'une des revendications précédentes, dans lequel la structure ajourée (30) est réalisée en plusieurs parties ne formant pas continuité de matière, chaque partie étant solidaires les unes des autres par l'intermédiaire de la peau (36).

8. Procédé de fabrication d'un boîtier (3) selon l'une des revendications 1 à 7, le boîtier (3) présentant une structure ajournée (30) dans un premier matériau, **caractérisé en ce que** ledit procédé comporte les étapes suivantes :
a. (E1 ; E2') préchauffage d'au moins une couche de peau (36) d'un deuxième matériau différent du premier matériau, par exemple le deuxième matériau étant un matériau d'isolation acoustique,
b. (E2, E30, E31) mise en forme de ladite au moins une couche de peau (36),
c. (E4 ; E4') positionnement de ladite au moins une couche de peau (36) dans un moule d'injection,
d. (E5) surmoulage de la structure ajourée (30) au moins autour de ladite au moins une couche de peau (36) par injection du premier matériau dans le moule d'injection, et
e. (E6) démoulage.

9. Module (2) de face avant comprenant un boîtier (3) selon l'une des revendication 1 à 7, **caractérisé en ce que** le module (2) comprend une entrée d'air (20) et une sortie d'air (22), au moins un échangeur de chaleur (8,10) étant agencé au sein du conduit d'écoulement (4), un groupe moto-ventilateur (12) étant agencé en aval par rapport au flux d'air à l'échangeur de chaleur (8,10).

## Patentansprüche

1. Gehäuse (3) für ein Stirnseitenmodul (2) eines Kraftfahrzeugs (1), das einen Strömungskanal (4) für die Strömung eines Luftstroms definiert, wobei das Gehäuse Folgendes umfasst:
a. eine durchbrochene Struktur (30), die mehrere Öffnungen (32) umfasst, die durch Rippen (34) begrenzt sind,
b. eine Haut (36), die mit der durchbrochenen Struktur (30) fest verbunden ist und die Öffnungen (32) so bedeckt, dass sie eine für den Luftstrom dichte Wand bildet, **dadurch gekennzeichnet, dass** die Öffnungen (32) zumindest teilweise gemäß einem sich wiederholenden Muster angeordnet sind.

2. Gehäuse (3) nach Anspruch 1, wobei die durchbrochene Struktur (30) mindestens 5 Öffnungen (32) umfasst, die alle durch die Rippen (34) begrenzt sind.

3. Gehäuse (3) nach einem der vorangehenden Ansprüche, wobei die Rippen (34) zumindest teilweise in einem Triangulationsgitter angeordnet sind.

4. Gehäuse (3) nach einem der vorangehenden Ansprüche, wobei die Dicke der durchbrochenen Struktur (30) zwischen 1 und 3 mm beträgt und die Dicke der Haut (36) zwischen 0,3 und 1 mm beträgt.

5. Gehäuse (3) nach einem der vorangehenden Ansprüche, wobei die durchbrochene Struktur (30) aus einem ersten Material ausgeführt ist und die Haut (36) aus einem zweiten Material ausgeführt ist, wobei das erste und das zweite Material von unterschiedlicher Zusammensetzung sind.

6. Gehäuse (3) nach einem der vorangehenden Ansprüche, wobei die Haut (36) einen inneren Hohlraum (38) umfasst.

7. Gehäuse (3) nach einem der vorangehenden Ansprüche, wobei die durchbrochene Struktur (30) aus mehreren Teilen ausgeführt ist, die keine Materialkontinuität bilden, wobei alle Teile über die Haut (36) fest miteinander verbunden sind.

8. Verfahren zur Herstellung eines Gehäuses (3) nach einem der Ansprüche 1 bis 7, wobei das Gehäuse (3) eine durchbrochene Struktur (30) aus einem ersten Material aufweist, **dadurch gekennzeichnet, dass** das Verfahren die folgenden Schritte aufweist:
a. (E1; E2') Vorheizen mindestens einer Hautschicht (36) aus einem zweiten Material, das sich vom ersten Material unterscheidet, wobei das zweite Material beispielsweise ein schallisolierendes Material ist,
b. (E2, E30, E31) Formen der mindestens einen Hautschicht (36),
c. (E4; E4') Positionieren der mindestens einen Hautschicht (36) in einer Spritzgussform,
d. (E5) Umspritzen der durchbrochenen Struktur (30) zumindest um die mindestens eine Hautschicht (36) herum durch Einspritzen eines ersten Materials in die Spritzgussform, und
e. (E6) Ausformen.

9. Stirnseitenmodul (2), umfassend ein Gehäuse (3) nach einem der Ansprüche 1 bis 7, **dadurch gekennzeichnet, dass** das Modul (2) einen Lufteinlass (20) und einen Luftauslass (22) umfasst, wobei innerhalb des Strömungskanals (4) mindestens ein Wärmetauscher (8, 10) angeordnet ist, wobei stromabwärts in Bezug auf den Luftstrom am Wärmetauscher (8, 10) ein Lüftersatz (12) angeordnet ist.

## Claims

1. Housing (3) for a front end module (2) of a motor vehicle (1) defining a flow duct (4) for the flow of an air stream, said housing comprising
a. a perforated structure (30) comprising a plurality of openings (32) delimited by ribs (34)
b. a skin (36) secured to the perforated structure (30) and covering the openings (32) so as to form an airtight wall impervious to the air stream,
**characterized in that** the openings (32) are arranged at least partially in a repeating pattern.

2. Housing (3) according to Claim 1, wherein the perforated structure (30) comprises at least 5 openings (32) all delimited by the ribs (34).

3. Housing (3) according to one of the preceding claims, wherein the ribs (34) are arranged at least partially in a cross-braced mesh structure.

4. Housing (3) according to one of the preceding claims, wherein the thickness of the perforated structure (30) is comprised between 1 and 3 mm and the thickness of the skin (36) is comprised between 0.3 and 1 mm.

5. Housing (3) according to one of the preceding claims, wherein the perforated structure (30) is made from a first material and the skin (36) is made from a second material, the first and second materials having different compositions.

6. Housing (3) according to one of the preceding claims, wherein the skin (36) has an internal cavity (38) .

7. Housing (3) according to one of the preceding claims, wherein the perforated structure (30) is made in several parts without continuity of material, each part being secured to another via the skin (36).

8. Method for manufacturing a housing (3) according to one of Claims 1 to 7, the housing (3) having a perforated structure (30) made from a first material, **characterized in that** said method comprises the following steps:
a. (E1; E2') preheating at least a skin layer (36) made of a second material different from the first material, the second material for example being an acoustic insulation material,
b. (E2, E30, E31) shaping said at least one skin layer (36),
c. (E4; E4') positioning said at least one skin layer (36) in an injection mould,
d. (E5) overmoulding the perforated structure (30) at least around said at least one skin layer (36) by injecting the first material into the injection mould, and
e. (E6) demoulding.

9. Front end module (2) comprising a housing (3) according to one of Claims 1 to 7, **characterized in that** the module (2) comprises an air inlet (20) and an air outlet (22), at least one heat exchanger (8, 10) being arranged within the flow duct (4), a motorized engine fan unit (12) being positioned downstream of the heat exchanger (8, 10) with respect to the flow of air.
